# EUROPEAN PATENT APPLICATION

(11) **EP 1 329 361 A1**
(43) Date of publication of application: **23.07.2003**
(21) Application number: 03250273.4
(22) Date of filing: 16.01.2003
(51) Int. Cl.: B60R 9/04

(54) **Vehicle roof carrier**

(30) Priority: 18.01.2002 GB 0201147
(71) Applicant: ROAST, Colin Geoffrey, Northampton NN4 9RW (GB)
(72) Inventor: ROAST, Colin Geoffrey, Northampton NN4 9RW (GB)
(74) Representative: Goodenough, Nigel

(57) **Abstract**

A load support device for use on the roof of a motor vehicle comprises a sheet (5) of flexible material to which are secured two support members (2, 3) on which a load may be placed. The straps (6-8) are secured to the sheet to enable the device to be secured to a motor vehicle, eg utilising hinge mountings of the vehicle. Preferably, the straps are such that they may be doubled back and secured to form a continuous loop. Each strap has an auxiliary loop (12) for use as a load lashing point. The device is intended for occasional use and when not required may be rolled into a compact configuration and stored in the boot of the vehicle.

## Description

This invention relates to a load support device and in the preferred embodiment provides a simple and convenient load support device which may be used to support a load on the roof of a motor vehicle.

The use of so called "roof racks" for carrying loads on the roof of a motor vehicle is well known. Such structures are typically rigid and are secured to the motor vehicle by clamps. Although the devices are generally satisfactory in use, they have a number of well recognised disadvantages. In particular, known roof racks suffer from the disadvantage that they are inconvenient and time consuming to install and remove, and when removed require significant storage space. As a result, known roof racks are not convenient for occasional use. Leaving the roof rack permanently in position is also disadvantageous since it increases the air resistance of the vehicle, and thereby increases fuel consumption.

Accordingly, the need exists for a simple and preferably low-cost load support device which may be used to support a load on the roof of a motor vehicle. In particular, the need exists for a device which is quick and simple to install and which can readily be removed when not required.

In accordance with the present invention there is provided a load support device comprising: at least two resilient elongate support members inter-connected by at least one flexible link, the or each link being connected to the support members such that when the or each link is fully extended the support members are generally parallel to each other and are spaced apart by a pre-determined spacing; and flexible anchors for anchoring the support members to the roof of a motor vehicle to receive a load to be carried on the roof.

The elongate support members may, in some embodiments of the invention, be flexible, or may be substantially rigid. If the elongate support members are substantially rigid they may comprise a substantially rigid core surrounded by resilient material to give the required resilient effect.

In one embodiment of the invention the flexible link is a material which can readily be wrapped around one or both of the support members in order to configure the device into a compact form for storage purposes.

Preferably, the or each link is constituted by a flexible sheet of material which has a width substantially equal to or slightly greater than the length of the support members, the support members being of equal length to each other. With such an arrangement, the link may be rolled onto one or both of the support members until the support members are at a pre-determined minimum spacing. This will constitute a storage configuration for the load support device. A bag may be provided to maintain the load support device in this storage configuration. When the device is required for use the link is unwound from one or both of the support members. The entire unit is then placed on the roof of a motor vehicle and the flexible anchors are used to secure the support members in position.

Suitable means must, of course, be provided for securing the load in position. However, once the load is secured to the motor vehicle by suitable means the weight of the load will be transferred to the roof of the vehicle via the support members and the link will prevent movement of the support members relative to each other.

In the particularly preferred embodiment of the invention the support members are cylinders of flexible resilient plastics or rubber material, and the link is a sheet of rubber or plastics material or a sheet of a woven or non-woven fabric. The sheet of material provides a substantially non-slip contact with the roof of the motor vehicle. The sheet of material may, for example, be a sheet of woven polymeric material which provides a non-slip contact with the roof of the vehicle.

At least one of the support members may have a flat running the length thereof to define a preferred use orientation for the support member, the preferred orientation being when the flat is directed towards the roof of the vehicle.

The flexible anchors are preferably in the form of webs or straps which are secured to the flexible sheet and are used to secure the flexible sheet to appropriate anchorages provided on the vehicle. The anchorages may comprise any suitable integral parts of the vehicle (for example, door hinges) or may be provided by a suitable anchor member which is inserted between two body panels (eg the boot lid and the surrounding bodywork) to provide an appropriate anchorage.

In a particularly preferred embodiment of the invention the flexible anchors are in the form of webbing straps which are secured to the flexible sheet by suitable means, for example, stitching. A buckle is provided for each flexible strap so that after the strap has been passed around a suitable anchor point (for example, a door hinge) it may be doubled back and secured to the buckle so that the flexible strap forms a continuous loop which is secured to the flexible sheet. This continuous loop may conveniently be used as a means for anchoring the load carried by the load support device. To this end, in the preferred embodiment, the strap is provided with an auxiliary loop to which the load may be secured by suitable ties. It will be appreciated that with such a system the load may be secured to the bodywork using continuous webbing loops of substantial strength and that, when the load has been so secured, the purpose of the load supporting device is merely to support the dead weight of the load on the vehicle roof. Additional securing elements may be provided on the load support device to secure the load in position.

In a particularly preferred embodiment of the invention the flexible sheet is of woven polymeric material and the support members are secured to the flexible sheet by forming pockets in the flexible sheet (as by sewing) into which the support members are inserted.

The invention will be better understood from the following description of a preferred embodiment thereof, given by way of example only, reference being had to the accompanying drawing wherein:
Figure 1 illustrates an embodiment of the present invention in a first, use, configuration on the roof of a motor vehicle;
Figure 2 illustrates the means by which the load supporting device of Figure 1 is secured to the door hinges of a vehicle; and
Figure 3 illustrates an alternative webbing arrangement.

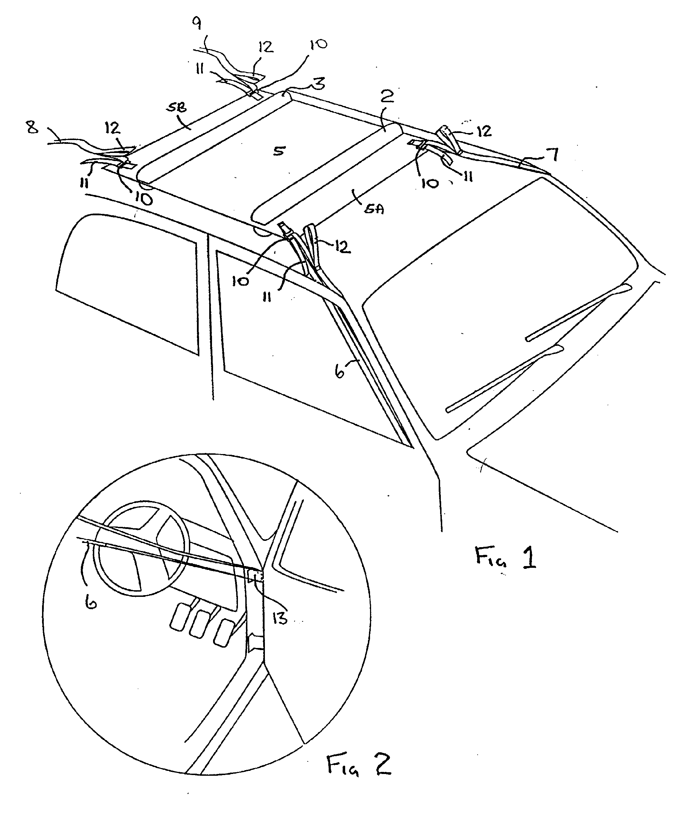

Referring firstly to Figure 1, the preferred load support device 1 comprises two support members 2, 3 which are formed at least in part from a flexible resilient material, for example foam rubber or foam plastics. In one embodiment of the invention each of the support members 2, 3 comprises a substantially rigid core, for example a substantially rigid tube, covered with a flexible resilient foam material. The support members 2, 3 extend substantially the full width of the device and may be solid or hollow according to the nature of the material from which they are made and the degree of resilience and flexibility required. The support members 2, 3 are preferably of uniform cross section along their length and may accordingly be formed by an extrusion process.

The support members 2, 3 are connected together by a link in the form of a sheet 5 of flexible material. The material of the sheet 5 may be a material which has a non-slip characteristic in relation to the roof of a motor vehicle and may, for example, be formed of or be coated with a non-slip polyurethane material. Alternatively, a separate non-slip mat may be provided to be placed on the roof of a vehicle before the support device of the present invention is put in position. The sheet 5 should preferably be substantially inextensible although some small degree of elastic extension may be desirable to provide a snug-fit to the roof of a vehicle. The sheet 5 is secured to the respective support members 2, 3 by any suitable means, as for example by being formed into pockets into which the support members 2, 3 are inserted.

The sheet 5 includes extensions 5A and 5B which extend respectively and forwardly of the support member 2 and rearwardly of the support member 3. The extensions 5A and 5B and the sheet 5 may be formed from a single sheet or may be formed by the assembly of a plurality of sheets, connected together by suitable means, for example, stitching or welding.

When the link is fully unwound the components assume the configuration shown in Figure 1 in which the support members 2, 3 are generally parallel to each other and are at a pre-determined spacing. With the components in this configuration the entire device may be laid on the roof of a motor vehicle. The support members 2, 3 will then form a resilient load bearing support upon which a load may be placed for carriage on the roof of the vehicle. The link 5 will maintain the support members in the required position, and will preferably resist relative movement between the support device and the roof of the vehicle.

Suitable means are provided for securing the device to the motor vehicle. In the illustrated embodiment of the invention the securing means comprise webbing straps 6 and 7 which are secured to the extension 5A and webbing straps 8, 9 which are secured to the extension 5B. The webbing straps may be secured to the extension by any suitable means, for example, sewing. Each webbing strap includes a buckle 10 located adjacent the respective extension 5A, 5B. The buckle is sized to receive the free end 11 of each strap so that each strap may be formed into a closed loop by securing the free end thereof to a respective buckle. In use, the support device is secured in position on the roof of the vehicle by passing the respective webbing straps around suitable anchorages, doubling them back, and securing the free ends 11 to the respective buckles 10.

As illustrated in Figure 2, suitable anchorages may be provided by any suitable fixed parts of the vehicle, for example a door hinge 13. Alternatively, a suitable anchor may be provided which can be trapped between two body parts, for example a boot lid and the surrounding bodywork. If such an anchor is used, it may provide an eye through which a webbing strap can be passed to be doubled back and secured as described above.

The webbing straps described above, when formed into closed loops, provide strong anchorages which may be used to secure in position a load carried on the support device. To this end, each webbing strap is preferably pre-formed with a loop 12 which can be used to secure a load in position using suitable auxiliary fastenings - for example further straps or rope lashings. The advantage of this arrangement is that if the load is secured to the straps 6-8, for example using the loops 12, the anchorages thereby provided are independent of the flexible sheet material of the support device. Hence, once a load has been secured in position the only substantial strain under which the support device will be placed is the downward gravitational load imposed on the support members 2, 3 by the weight of the load.

In many cases, the loops 12 provided by the webbing will provide sufficient anchorage points for the load. However, if additional anchorage points are required, suitable means, for example short straps, may be secured to the sheet 5 or the extensions 5A, 5B at any suitable point.

If the load is long, for example a long length of timber, it may additionally be secured by ropes or straps to a towing hitch or the like at the back of the vehicle and to a towing point or the like located at the front of the vehicle. The exact means for securing the load to the vehicle is not a feature of the present invention.

In general it is believed that the device will only be deployed when it is actually required for use and accordingly as soon as the load has been removed the user will roll the device into a storage configuration and place it for storage, for example in the boot of the vehicle. A storage bag may be provided for the device.

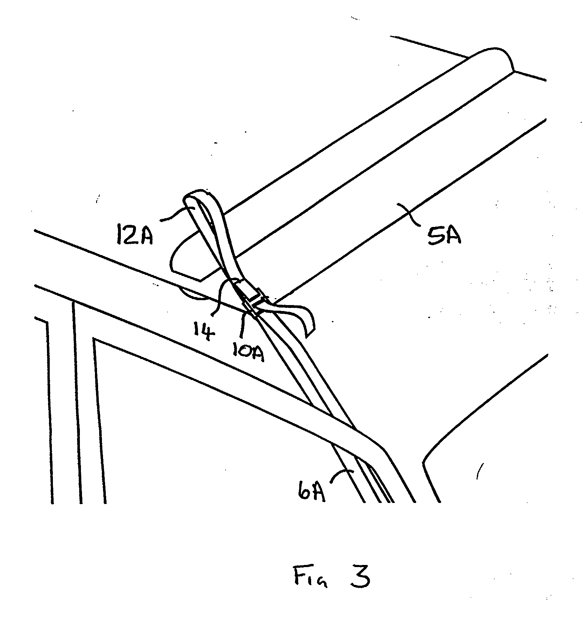

An alternative anchoring arrangement is shown in Figure 3. The arrangement is generally similar to that described above with reference to Figures 1 and 2, but in this case a loop 12A is formed in the material of the strap 6A by the stitching 14 which secures the strap to the extension 5A. The buckle 10A is located at the very end of the strap 6A. As previously, the anchor is deployed by passing the webbing of the strap around a suitable anchorage point, for example a door hinge, and doubling the webbing back to be secured to the buckle 10A.

## Claims

1. A load support device comprising: at least two resilient elongate support members inter-connected by at least one flexible link, the or each link being connected to the support members such that when the or each link is fully extended the support members are generally parallel to each other and are spaced apart by a pre-determined spacing; and flexible anchors for anchoring the support members to the roof of a motor vehicle to receive a load to be carried on the roof.

2. A load support device according to Claim 1 wherein the link comprises a sheet of flexible material.

3. A load support device according to claim 2 wherein the support members are secured to the sheet material by providing pockets in the sheet material in which the support members are received.

4. A load support device according to claim 2 or claim 3 wherein the sheet material includes extensions, which extend beyond the support members.

5. A load support device according to claim 3 wherein the flexible anchors are secured to the extensions.

6. A load support device according to any preceding claim wherein the flexible anchors comprise webbing straps.

7. A load support device according to claim 6 wherein the webbing straps are secured to the flexible sheet.

8. A load support device according to claim 6 or claim 7 wherein the webbing straps are provided with buckles to which the free end of the straps may be secured to form each strap into a closed loop.

9. A load support device according to any of claims 6, 7 or 8 wherein each strap provides an auxiliary loop for use as a load lashing point.

10. A load support device according to any preceding claim wherein the device may be rolled into a compact storage configuration when not required for use.
